# EUROPEAN PATENT APPLICATION

(11) **EP 3 101 838 A1**
(43) Date of publication of application: **07.12.2016**
(21) Application number: 15305849.0
(22) Date of filing: 03.06.2015
(51) Int. Cl.: H04L 12/18, H04N 7/15

(54) **METHOD AND APPARATUS FOR ISOLATING AN ACTIVE PARTICIPANT IN A GROUP OF PARTICIPANTS**

(71) Applicant: Thomson Licensing, 92130 Issy-les-Moulineaux (FR)
(72) Inventor: ONNO, Stéphane, 35576 Cesson-Sévigné (FR); OZEROV, Alexey, 35576 Cesson-Sévigné (FR); DUONG, Quang Khanh Ngoc, 35576 Cesson-Sévigné (FR); LEFEBVRE, Frédéric, 35576 Cesson-Sévigné (FR)
(74) Representative: Huchet, Anne

(57) **Abstract**

Isolation of an active participant in a group of participants commences by first capturing images and audio of participants. Thereafter, an active one of the participants in the group of participants (e.g., a participant that is currently speaking) is identified. After identification of the active participant, at least one of participants' images and participants' audio are rendered to isolate the active participant.

## Description

### TECHNICAL FIELD

This disclosure relates to isolating an active participant in a group of participants.

### BACKGROUND ART

Typical audio-video conference systems enable participants at distant locations to interact with each other on-line. Such systems include one or more video cameras to capture participants' images as well as multiple microphones to capture participants' audio. Present-day audio-video conference systems configured as described above, operate in a static mode with regard to which participants are active and which are not. Thus, such systems do not render the displayed participants' images and audio to isolate an active participant, e.g., a participant that is currently speaking.

Thus, a need exists for an improved method and apparatus that overcomes aforementioned disadvantages, especially, the ability to isolate a currently active participant from other participants in a group.

### BRIEF SUMMARY

Briefly, a method for isolating an active participant in a group of participants includes capturing images and audio of the participants. Thereafter, an active one of the participants in the group of participants (e.g., a participant that is currently speaking) is identified. After identification of the active participant, at least one of participants' images and participants' audio is rendered to isolate the active participant.

It is an object of the present principles to provide a technique for isolating an active participant in a group of participants;

It is another object of the present principles to accomplish isolation of an active participant in a group of participants automatically;

It is another object of the present principles to accomplish isolation of an active participant in a group of participants using parameters obtained from participants' images to perform audio separation; and

It is another object of the present principles to accomplish isolation of an active participant in a group of participants using face recognition.

### BRIEF SUMMARY OF THE DRAWINGS

FIGURE 1 depicts a block schematic diagram of an exemplary apparatus for practicing the isolation technique of the present principles, and
FIGURE 2 depicts a block schematic diagram of a flowchart depicting the steps of isolation technique of the present principles.

### DETAILED DESCRIPTION

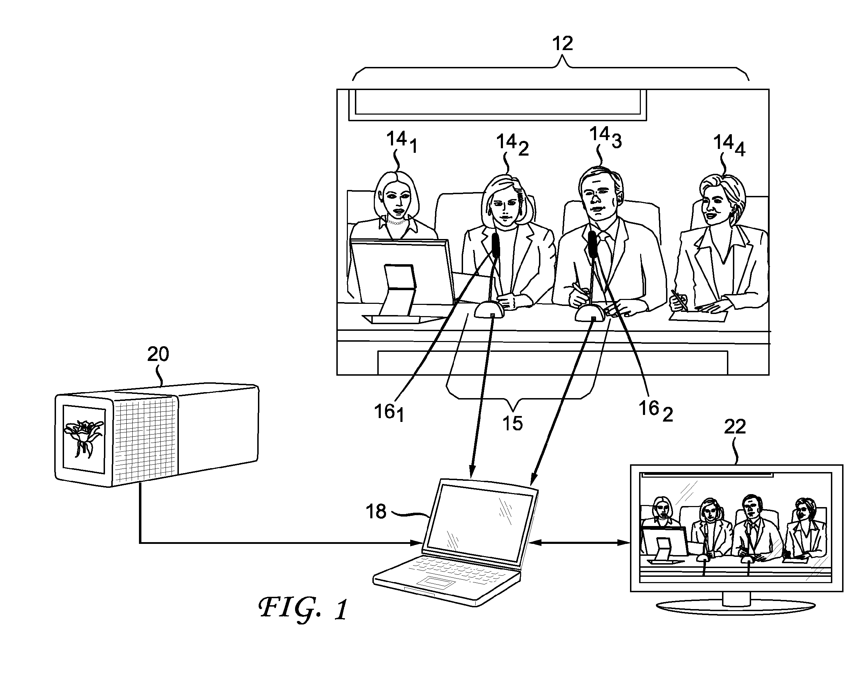

FIGURE 1 depicts an exemplary system 10 in accordance with an aspect of the present principles for isolating an active participant (e.g., a participant currently speaking) in a group 12 of participants. In the illustrated embodiment, the group 12 includes participants 14₁, 14₂, 14₃ and 14₄, although the number of participants could include more or less than the four participants depicted in FIG. 1. The system 10 includes an array 15 of microphones, illustratively depicted by microphones 16₁ and 16₂, for capturing audio of the participants 14₁, 14₂, 14₃ and 14₄. In the exemplary embodiment of FIG. 1, the number of participants exceeds the number of microphones so some participants share a microphone. In other instances, the number of microphones in the array 15 will equal the number of participants, so each individual participant has his or her own microphone. In practice, the greater the number of microphones, the easier it becomes to separate the audio associated with the active participant. As discussed in detail hereinafter, the system 10 advantageously renders the audio from the array of microphones 15 to mute all but the active participant (e.g., the participant currently speaking). By way of such audio processing, if a new participant begins speaking, muting of the other participants can occur without any distortion. Thus, after rendering only the audio of the active participant remains audible, even though all of the microphones in the array 15 still remain active.

The system 10 includes a computer 18, illustratively depicted as a laptop computer. However, the computer 18 could take other forms such as a desktop computer, a server, smart phone or a set top-box for example. The computer 18 receives audio from each of the microphones 16₁ and 16₂ of the array 15. Depending on the number of microphones in the array 15 and the number of available ports on the computer 18, the system 10 could include a port interface (not shown) for interfacing multiple microphones to the computer.

The system 10 also includes at least one light field (plenoptic) camera 20. Typical light field cameras are characterized by an array of micro-lenses (not shown) in the optical path of an otherwise conventional image sensor (not shown), which enables the light field camera to sense intensity, color, and directional information. Present day manufacturers of such light field cameras include Lytro and Raytrix among others. The light field camera 20 provides its video signal to the computer 18, which can display the image captured by the light field camera on an external monitor 22. If the monitor 22 has the ability to reproduce audio, then the monitor will reproduce the audio from the computer 18 as processed by the computer.

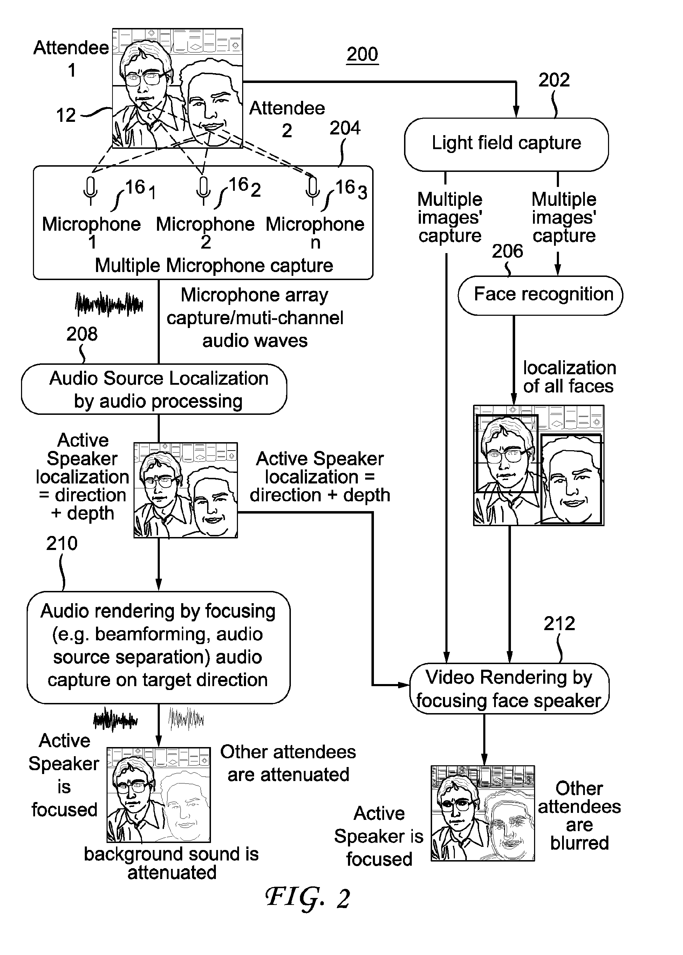

As described hereinafter with respect to FIG. 2, the computer 18 extracts image and depth information of the active participant from the image of participants captured by the light field camera 20. The computer 18 uses that information in connection with audio source separation techniques to render the audio from the array of microphones 15 to mute all but the active participant (e.g., the participant currently speaking). Thus, the microphones in the array 15 all remain active but the computer 18 only reproduces the audio from the active participant. The computer 18 can also use identification of the active participant to isolate that participant's image from the image of other participants, such as by blurring the image of such other participants.

FIGURE 2 depicts in flow chart form the steps of a process 200 in accordance with the present principles for isolating the active participant in the group 12 of participants of FIG. 1. The process 200 of FIG. 2 commences by capturing the image of the group 12 of participants by the light field camera 20 of FIG. 1 during step 202. The audio associated with the group 12 of participants undergoes capture by microphones 16₁-16₃ in an array of microphones during step 204. (Note the array of microphones depicted in FIG 2 includes three microphones 16₁-16₃ as compared to the two microphones 16₁ and 16₂ in the array 15 depicted in FIG. 1.) The image capture and audio capture typically occurs simultaneously although steps 202 and 204 could occur at separate times, as long as the time difference between them remains relatively short to avoid lag.

Following steps 202 and 204, face recognition occurs during step 206 to localize faces in the image captured by the light field camera 20 of FIG. 1. The computer 18 of FIG. 1 performs such face recognition during step 206 by extracting features characteristic of each human face and thereafter the computer separates the face(s) from the background. Presently, there exists a variety of commercially available software programs for accomplishing this task.

Audio localization then occurs during step 208 of FIG. 2, typically, although not necessarily, contemporaneously with step 206. During execution of step 208, the computer 18 separates and localizes audio of an active participant. Audio source separation, sometimes referred to as audio source localization, can occur in different ways. For example, the computer 18 can perform audio source separation by making use of acoustic particle velocity measurements, via a probe (not shown) to identify the source of the audio which corresponds to the active participant. Another approach can localize the audio source using time of difference arrival (TODA) which takes account of the fact audio from a more distant source will arrive later in time than audio from a nearer source. The computer 18 can also employ triangulation by using depth and direction information obtained by the computer from the image captured by the light field camera 20 to locate the microphone associated with an active participant.

Step 210 undergoes execution after step 208. During step 210, the computer 18 renders the audio obtained from the microphone array to mute or otherwise attenuate the audio from all but the active participant whose audio underwent separation during step 208. The computer 18 can employ various techniques to render the audio in this manner. For example, the computer 18 could employ beamforming to control the phase and relative amplitude of the audio from each microphone to create a pattern of constructive and destructive interference in the wave front associated with the audio from the microphones in the array. The computer 18 could also make further use of the above-described audio source separation techniques as well as known audio capture techniques to mute or otherwise attenuate the audio from all but the active participant.

Following face recognition during step 206, execution of step 212 occurs during which the computer 18 renders the video captured by the light field camera 20 to isolate an active participant from the other participants. Execution of step 212 includes identification of the active participant, which can occur manually or automatically. For example, an operator can manually identify an active participant based on the operator's observations of the participants to determine which one is currently speaking. In some instances, if the operator is familiar with the various participants' voice, the operator can use that information in addition to, or even in place of a visual observation to identify the active participant. In this case audio localization can guide the rendering/isolating of the participant.

Automatic identification of the active participant can occur in several different ways. For example, the computer 18 could analyze the faces detected during step 206 for lip movement to determine which participant currently speaking to identify that person as the active participant. Another approach for automatic identification of the active participant could include identifying all of the participants in the group of participants 12 by matching the faces recognized during step 206 to known pictures of participants. The computer 18 could then perform voice recognition on the audio to identify the individual participant currently speaking and then match the voice of the person actually speaking to the face of the corresponding participant to identify that participant as the active participant.

Once the computer 18 has identified the active speaker (e.g., guided by audio source separation), the computer can then render the video from the light field camera 20 to isolate the active speaker during step 212. Advantageously, the light field camera 20 not only provides an image, but depth and direction information as well. The depth and direction information enables the computer 18 to process the image from the light field camera during such rendering to focus on the face of the active participant while blurring the image of the other participants.

While the technique of the present principles for isolating an active participant within a group of participants has been described in the context of an audio-video conferencing system, the technique has application in many other environments. For example, the technique could be used in the context of capturing the audio and images of a live show, for example a concert or sporting event, to enable isolation of a participant among a group of participants. The technique could enable moving of a microphone in a given direction or changing the audio focus of a given directional microphone to increase audio zoom accuracy.

Moreover, the isolation technique of the present principles could be employed during post processing, assuming both video and depth information undergo capture at shooting stage and remain available at post-production time. At this stage, the director or other personnel can easily modify a given focus plan without shooting the scene again because of a lack of a corresponding audio source. To that end, the process of the present principles can be semi-automatic at least for a preview or useful for fine tuning audio from video.

Implementation of the technique for isolating the active participant in a group of participants described can occur by executing instructions on a processor, and storage of such instructions (and/or data values produced by an implementation) can take place on a processor-readable non-transitory medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). Such instructions can reside in an application program tangibly embodied on a processor-readable medium. Such Instructions can exist in hardware, firmware, software, or a combination. Further, such instructions can exist in an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal can undergo formatting to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal can undergo transmission over a variety of different wired or wireless links, as is known. The signal may be stored on a processor-readable medium.

A number of implementations have been described. Nevertheless, various modifications can occur. For example, elements of different implementations can undergo combination, modification or removal to produce other implementations. Additionally, one of ordinary skill will understand that other structures and processes can undergo substitution for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for isolating an active participant in a group of participants, comprising capturing images (202) and audio (204) of participants in the a group of participants; identifying an active one of the participants in the group of participants (208); and rendering at least one of participants' images (214) and participants' audio (212) to isolate the active participant.

2. The method according to claim 1 wherein identification of the active participant occurs automatically.

3. The method according to claim 1 wherein identification of the active participant occurs manually.

4. The method according to claim 2 wherein automatic identification of the active participant comprises:
recognizing participants faces in the participants' images; and
analyzing each participant's face for lip movement to determine which participant currently speaking to identify that participant as the active participant.

5. The method according to claim 2 wherein automatic identification of the active participant comprises:
recognizing participants faces in the participants' images;
establishing participants' identifies based on recognition of participants' faces;
performing voice recognition on participants' audio to identify a participant that is currently speaking; and
matching a voice of the participant actually speaking to the face of a corresponding participant to identify the active participant.

6. The method according to claim 1 wherein rendering of at least one of participants' images and participants' audio to isolate the active participant comprises:
separating and localizing audio of the active participant using image and depth information extract from an image of the active participant (210).

7. The method according to claim 1 wherein the rendering of at least one of participants' images and participants' audio to isolate the active participant includes muting audio of all but the active participant.

8. The method according to claim 1 wherein rendering of at least one of participants' images and participants' audio to isolate the active participant includes blurring selected participants' images so only the active participant has its image in focus.

9. A system for isolating an active participant in a group of participants, comprising:
a camera (20) capturing images of participants in the conference;
an array (15) of microphones for capturing participants' audio;
a processor (18) coupled to the light field camera and the array of microphones, the processor configured to (a) identify an active one of the participants in the group of participants; and (b) render at least one of participants' images and participants' audio to isolate the active participant.

10. The system according to claim 9 wherein the processor identifies the active participant automatically.

11. The system according to claim 9 wherein the processor identifies the active participant in response to manual input from an operator.

12. The system according to claim 9 wherein the processor automatically identifies the active participant by (a) recognizing participants faces in the participants' images; and (b) analyzing each participant's face for lip movement to determine which participant currently speaking to identify that participant as the active participant.

13. The system according to claim 9 wherein the processor automatically identifies the active participant by (a) recognizing participants faces in the participants' images; (b) establishing participants' identifies based on recognition of participants' faces; (c) performing voice recognition on participants' audio to identify a participant that is currently speaking; and
(d) matching a voice of the participant actually speaking to the face of a corresponding participant to identify the active participant.

14. The system according to claim 9 wherein the processor renders at least one of participants' images and participants' audio to isolate the active participant by muting audio of all but the active participant..

15. The system according to claim 9 wherein the processor renders at least one of participants' images and participants' audio to isolate the active participant includes blurring selected participants' images so only the active participant has its image in focus.
